# FASCICULE DE BREVET EUROPEEN

(11) **EP 0 323 446 B1**
(45) Date de publication et mention de la délivrance du brevet: **12.05.1993**
(21) Numéro de dépôt: 89200373.2
(22) Date de dépôt: 23.10.1986
(51) Int. Cl.: G11B 17/00, G11B 27/10

(54) **Appareil d'enregistrement et/ou de reproduction notamment d'images fixes**
Aufzeichnungs- und/oder Wiedergabegerät, insbesondere für Standbilder
Recording and/or reproducing apparatus, in particular for still pictures

(30) Priorité: 23.10.1985 JP 236569/85; 23.10.1985 JP 236570/85; 29.10.1985 JP 242446/85
(43) Date de publication de la demande: 05.07.1989
(62) Demande divisionnaire de: 86402377.5
(73) Titulaire: SONY CORPORATION, Tokyo 141 (JP)
(72) Inventeur: Tanaka Satomi, c/o Sony Corporation, Shinagawa-ku, Tokyo (JP); Ichimura Eiichi,c/o Sony Corporation, Shinagawa-ku,Tokyo (JP)
(74) Mandataire: Cabinet HERRBURGER

(56) Documents cités:
- EP-A- 0 105 213
- FR-A- 2 544 536
- FR-A- 2 573 905
- US-A- 4 210 785
- US-A- 4 270 150
- US-A- 4 591 931
- PATENT ABSTRACTS OF JAPAN vol. 9, no. 217 (P-385) 1940 04 septembre 1985, & JP-A-60 076071

## Description

La présente invention concerne de façon générale un appareil d'enregistrement et/ou de reproduction d'images fixes et plus particulièrement un appareil d'enregistrement et/ou de reproduction utilisant comme support d'enregistrement un disque magnétique.

On connaît différents types d'appareils d'enregistrement et/ou de reproduction d'images fixes utilisant un disque d'enregistrement magnétique en forme de feuille. Plus particulièrement récemment, il a été développé un nouveau disque souple de 5,08 cm (2 inches) destiné initialement à un appareil photographique électronique. Cependant, on estime actuellement qu'un tel disque souple de petite dimension peut s'utiliser non seulement dans un appareil photographique électronique mais également à d'autres fins comme par exemple la reproduction ou l'enregistrement d'une image vidéo fixe, l'enregistrement d'informations audio ou de données numériques, etc.

Les demandes et brevets antérieurs appartenant aux présents demandeurs ont concerné principalement la structure de l'enveloppe recevant le disque d'enregistrement magnétique ou disque souple de faible diamètre, la structure de l'appareil dans lequel on place la pochette pendant l'enregistrement et/ou la reproduction des signaux du disque ainsi que le format du signal enregistré, etc. L'art antérieur ne contient toutefois aucune information relative aux fonctions de l'appareil d'enregistrement et/ou de reproduction, en particulier pour utiliser le petit disque souple ci-dessus à des fins d'enregistrement de différents types de signaux d'information suivant une séquence mélangée.

On connaît également par la demande européenne EP-A-105 213 un système d'image photographique électronique dans lequel l'information image est enregistrée sur un disque magnétique avec des signaux codés numériques relatifs à la nature de l'image enregistrée, au nombre de piste de l'enregistrement, à la date et l'heure de cet enregistrement, ces informations étant affichées pendant la reproduction de l'image.

La demande de brevet européen EP-A-0 187 073 faisant partie de l'état de la technique selon l'article 54(3) CBE décrit un procédé de réalisation de programmes audio-visuels à partir d'images mémorisées sur un vidéo-disque. La sélection des images désirées est effectuée à partir d'un clavier, à l'aide d'un mini-ordinateur qui engendre des codes correspondant aux images choisies. La série de codes ainsi crée est enregistrée sur une cassette de magnétophone. Pour reproduire le programme audio-visuel, il suffit de commander un lecteur de vidéo-disques par la série de codes obtenue par lecture de la cassette. L'utilisation d'un mini-ordinateur pour générer les codes à enregistrer sur la bande magnétique est relativement complexe. De plus, aucune intervention ultérieure sur le déroulement du programme enregistré sur la cassette n'est possible.

Vis-à-vis de ces dispositifs connus, la présente invention concerne un appareil d'enregistrement et/ou de reproduction de différents types de signaux d'information sur des pistes d'enregistrement circulaires concentriques d'un disque d'enregistrement magnétique, cet appareil comprenant un moteur pour entraîner en rotation, à une vitesse prédéterminée, le disque d'enregistrement magnétique,
au moins un transducteur pour enregistrer et/ou reproduire les signaux d'information des pistes d'enregistrement,
un moyen de positionnement pour positionner le transducteur sur une piste choisie,
des boutons de commande comprenant au moins dix touches de sélection des pistes et une touche de sélection de piste en série pour définir des séquences de programme du moyen de positionnement du transducteur,
une mémoire de séquence pour enregistrer la séquence des données correspondant aux séquences de programme définies par les boutons de commande et un moyen de contrôle de programme couplé à la mémoire de séquences pour contrôler le moyen de positionnement, en séquence, suivant la séquence,de données enregistrées dans la mémoire de séquences, la séquence de données contenant de manière mélangée une séquence de sélection de pistes aléatoire, et une séquence de sélection de piste en série, ce moyen de contrôle de programme étant mis en oeuvre par l'un des boutons de commande pour interrompre la séquence de programme et pour récupérer une étape de programme précédente de la séquence de programme, et la séquence de sélection de piste en série étant définie par la commande de la touche de sélection de piste en série après sélection d'une piste de départ par la commande sélective des dix touches.

Ainsi, la présente invention se propose de créer un appareil d'enregistrement et/ou de reproduction d'images fixes ayant différentes fonctions avantageuses.

L'invention se propose également de créer un appareil d'enregistrement et/ou de reproduction dans lequel la feuille d'enregistrement magnétique en forme de disque est utilisée comme support d'enregistrement et un ensemble d'images fixes sont enregistrées sur les pistes d'enregistrement circulaires, concentriques respectives pour être reproduites séquentiellement dans un ordre choisi par l'utilisateur, cet appareil pouvant notamment utiliser un disque d'enregistrement magnétique d'un diamètre de 5,08 cm (2 inches) et ayant 50 pistes d'enregistement circulaires, concentriques.

L'invention a également pour but de créer un appareil dans lequel on puisse programmer un accès successif aux pistes, un accès aléatoire aux pistes et une combinaison mélangée pour pouvoir être utilisé automatiquement à l'enregistrement et à la lecture de façon que la fonction de programme d'accès aux pistes soit relativement simple et très efficace en pratique.

L'invention a également pour but de créer un appareil dans lequel la tête de reproduction ou de lecture est déplacée suivant un ordre programmé pour reproduire séquentiellement l'information enregistrée sur les pistes choisies et dans lequel on peut contrôler le programme exécuté précédemment en interrompant l'exécution du programme et en faisant revenir le programme à une étape antérieure par action manuelle.

L'invention a également pour but de créer un appareil dans lequel l'état enregistré ou le type de signaux d'information enregistrés dans chaque piste d'enregistrement est apprécié par la sortie de la tête de reproduction de lecture, un signal d'identification correspondant à l'état enregistré de chaque piste enregistrée étant mis dans une mémoire à une adresse correspondant à la piste enregistrée, respective et le signal d'identification correspondant à l'état enregistré contenu dans la mémoire étant lu pour afficher simultanément les états enregistrés de toutes les pistes.

L'invention a également pour but de créer un appareil du type ci-dessus qui puisse s'appliquer à différents domaines tels que l'éducation, l'électronique médicale, la présentation d'actions commerciales, la publicité dans les centres commerciaux, etc.

La présente invention sera décrite de façon plus détaillée à l'aide des dessins annexés, dans lesquels :
- la figure 1 est un schéma-bloc d'un circuit d'un appareil d'enregistrement et/ou de reproduction d'une image fixe selon un mode de réalisation de la présente invention ;
- la figure 2 est une vue en perspective d'un appareil d'enregistrement et/ou de reproduction d'une image fixe selon la présente invention, montrant particulièrement le tableau de commande ;
- la figure 3 est une vue en élévation schématique partiellement coupée du moyen d'entraînement du disque de l'appareil d'enregistrement et/ou de reproduction selon l'invention ;
- la figure 4 est une vue en perspective d'un contrôleur de programme selon l'invention, montrant en particulier la disposition du tableau de commande ;
- la figure 5 est un ordinogramme servant à expliquer le fonctionnement de l'appareil d'enregistrement et/ou de reproduction selon la figure 2 ;
- la figure 6 est un schéma d'un exemple d'affichage apparaissant sur le tube cathodique de l'appareil selon l'invention ;
- la figure 7 est un ordinogramme d'un sous-programme faisant partie de l'ordinogramme de la figure 5 ;
- la figure 8 (qui se compose des figures 8-I et 8-II apparaissant sur deux feuilles pour permettre l'utilisation d'une échelle suffisamment grande) est un ordinogramme servant à expliquer l'utilisation du contrôleur de programme de la figure 4 pour créer un programme de lecture défini par l'utilisateur ;
- la figure 9 est un ordinogramme servant à expliquer l'exécution d'un programme mélangé enregistré dans une mémoire vive ;
- la figure 10 est un ordinogramme montrant la mise en oeuvre du contrôleur de programme selon l'invention et auquel il sera fait référence pour expliquer l'une des fonctions les plus avantageuses de l'appareil.

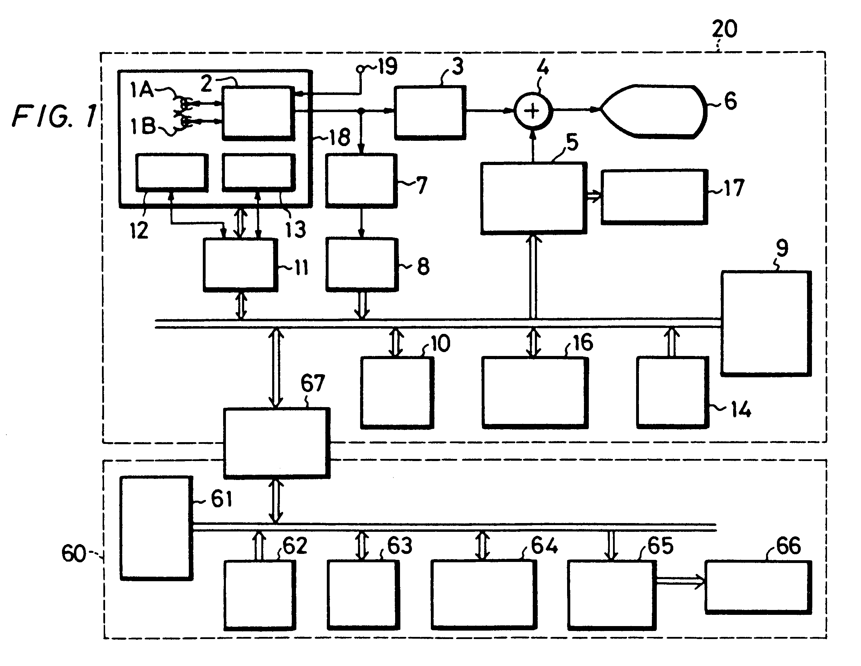

De manière détaillée selon la figure 1, un appareil d'enregistrement et/ou de reproduction d'une image fixe selon un mode de réalisation de la présente invention se compose de manière générale d'un appareil d'enregistrement et/ou de reproduction 20 qui exécute les opérations d'enregistrement et/ou de reproduction ainsi que d'un moyen de commande de programme 60.

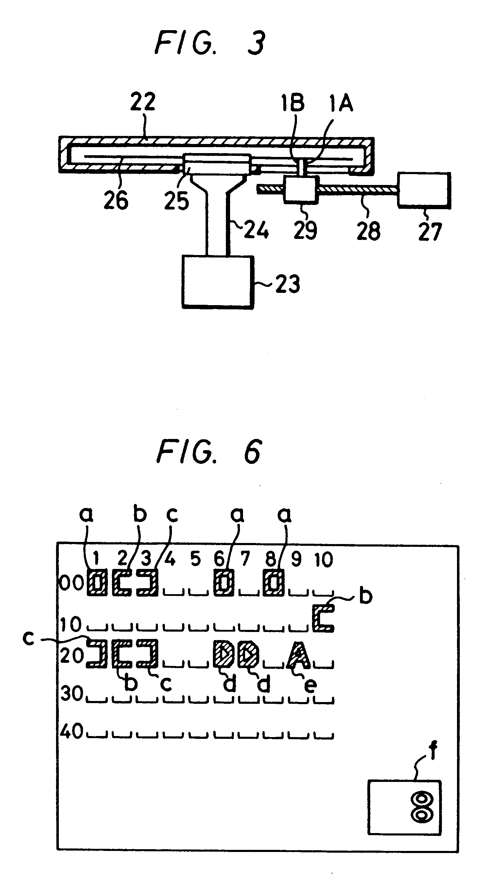

L'appareil d'enregistrement et/ou de reproduction 20 se compose de têtes d'enregistrement et/ou de reproduction 1A et 1B qui sont mobiles toutes deux dans la direction radiale d'un support ou feuille d'enregistrement magnétique en forme de disque 26 (voir figure 3) comportant par exemple 50 pistes d'enregistrement circulaires, concentriques. Un amplificateur d'enregistrement et/ou de reproduction 2 amplifie les signaux enregistrés ou reproduits par les têtes 1A et 1B. Le signal reproduit par l'amplificateur d'enregistrement et/ou de reproduction 2 est traité par un processeur vidéo 3, puis est appliqué à une borne d'entrée d'un additionneur 4 qui additionne ce signal à un signal d'information de piste appliqué à une autre borne d'entrée de l'additionneur 4 par un circuit de commande d'affichage 5 ; le signal est alors affiché sur un tube cathodique 6.

Un détecteur de fréquence radio (RF) 7 sert à détecter le signal RF du signal de sortie reproduit fourni par l'amplificateur d'enregistrement et/ou de reproduction 2. Un détecteur de signal d'identification d'enregistrement (ID) 8 détecte en fonction du signal de sortie du détecteur RF, 7 la nature du signal d'information reproduit d'une ou plusieurs pistes du disque d'enregistrement 26 qui est soit une image vidéo fixe enregistrée comme signal d'information de trame sur une piste ou enregistrée comme signal d'information d'image sur deux pistes adjacentes ou encore comme signal d'information de données numériques ou d'informations audio ou analogues.

Les signaux d'identification du type et de la nature de l'information enregistrée dans chaque piste sont fournis comme signaux de sortie du détecteur de signaux d'identification ID, 8 et sont enregistrés dans une mémoire vive (RAM) 10 en fonction de l'opération de commande effectuée par une unité centrale de traitement (CPU) 9.

Un circuit de commande d'accès de têtes 12 est commandé par l'unité CPU 9 par l'intermédiaire du circuit entrée/sortie I/0, 11. Le circuit de commande d'accès de têtes 12 sert à commander un moteur 27 (figure 3) qui entraîne les têtes d'enregistrement et/ou de reproduction 1A et 1B dans la direction radiale. Un détecteur de position de piste zéro 13 est utilisé pour détecter la piste initiale ou piste zéro à laquelle on accède par les têtes.

Les têtes 1A et 1B sont espacées dans la direction radiale du disque 26 de manière à balayer les pistes adjacentes du disque. Seulement une tête, par exemple la tête 1A, est mise en oeuvre pour enregistrer ou reproduire un signal d'information sur une seule piste, par exemple un signal d'information de trame, un signal d'information audio ou un signal d'information de données numériques. Toutefois, lors de l'enregistrement ou de la reproduction d'un signal d'information d'image dans deux pistes adjacentes, on met en oeuvre la tête 1A pendant une rotation du disque 26 et sans changer la position des têtes, on met en oeuvre la tête 1B pendant la rotation suivante du disque d'enregistrement magnétique.

Les programmes servant à commander l'appareil d'enregistrement et/ou de reproduction 20 sont enregistrés de manière préalable dans une mémoire morte (ROM) 14.

Comme représenté à la figure 1, les têtes d'enregistrement et/ou de reproduction 1A et 1B, le circuit-détecteur de position de piste zéro 13 et le circuit de commande d'accès de têtes 12 sont compris dans le moyen d'entraînement 18. En mode d'enregistrement, le signal à enregistrer est appliqué par la borne 19 et l'amplificateur d'enregistrement et/ou de reproduction 2 aux têtes d'enregistrement et/ou de reproduction 1A et 1B.

Le moyen d'entraînement de disque 18 est commandé par l'unité CPU 9 par l'intermédiaire du circuit I/0 11 suivant le bouton de commande de fonction, choisi parmi l'ensemble des boutons de commande 16 (figure 1) sur le panneau avant de l'appareil d'enregistrement et/ou de reproduction 20, comme cela sera détaillé ci-après. De plus, un panneau d'affichage 17 prévu sur le panneau avant de l'appareil d'enregistrement et/ou de reproduction 20 est commandé par l'unité CPU 9 par l'intermédiaire du circuit de commande d'affichage 5.

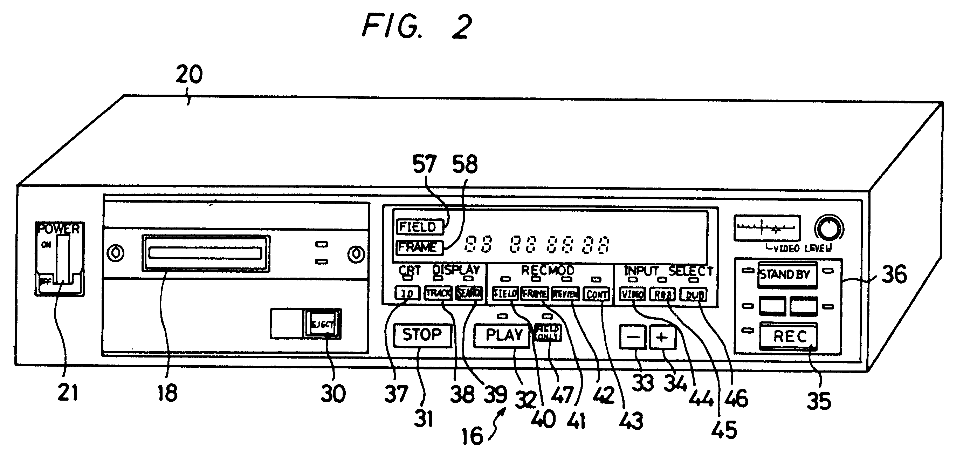

Selon la figure 2, l'appareil d'enregistrement et/ou de reproduction 20 comporte un bouton de marche/arrêt 21 à l'avant du boîtier au voisinage du moyen d'entraînement de disque 18. Comme représenté à la figure 3, le moyen d'entraînement 18 comporte un moteur à broche 23 auquel est couplé un axe 24. Un plateau à disque 25 est fixé à l'axe 24 pour recevoir le disque en forme de feuille magnétique 26 qui reste dans la pochette de disque 22. Un moteur d'accès de têtes 27 déplace les têtes 1A et 1B dans la direction radiale du disque magnétique 26 ; ce moteur est couplé à une vis 28 qui est vissée dans un bloc porte-têtes 29 sur lequel sont prévues les têtes d'enregistrement et/ou de reproduction 1A et 1B.

Selon la figure 2, l'ensemble des boutons de commande 16 est prévu sur le panneau avant de l'appareil d'enregistrement et/ou de reproduction 20 ; cet ensemble comprend un bouton d'éjection (EJECT) 30 que l'on commande pour éjecter la pochette de disque 22 avec le disque magnétique 26 (figure 3) par rapport au moyen d'entraînement de disque 18. L'ensemble de boutons de commande 16 du panneau avant de l'appareil d'enregistrement et/ou de reproduction 20 comporte également un bouton d'arrêt (STOP) 31, un bouton de lecture (LEC) 32, des boutons moins (-) et plus (+) 33, 34 qui servent à faire avancer et reculer respectivement la tête, un bouton d'enregistrement (REC) 35 et un bouton d'attente (ATT) 36.

Les références numériques 37, 38 et 39 désignent des boutons de commande d'affichage respectifs (AFFICHAGE SUR LE TUBE CATHODIQUE). De façon plus particulière, ces boutons de commande d'affichage se composent d'un bouton d'identification (ID) 37, d'un bouton de piste (PISTE) 38 et d'un bouton de recherche (RECH) 39. Les références numériques 40, 41, 42 et 43 désignent les boutons respectifs utilisés en mode d'enregistrement et comprenant un bouton de trame (TRAME) 40, un bouton d'image (IMAGE) 41, un bouton de relecture (RELEC.) 42 et un bouton de poursuite (CONT) 43.

En mode d'enregistrement, lorsqu'on a enfoncé le bouton de trame 40, l'information d'enregistrement est enregistrée à la manière d'une trame alors que si l'on enfonce le bouton d'image 41, le signal d'enregistrement est enregistré à la manière d'une image dans deux paires de pistes adjacentes à l'aide des têtes 1A et 1B successivement comme cela a été indiqué précédemment.

Lorsqu'on enfonce le bouton de relecture 42, l'information d'enregistrement de la piste en cours de balayage est retenue et l'appareil commute immédiatement en mode de reproduction ou de lecture pour reproduire le signal enregistré dans cette piste précise. Lorsqu'on actionne le bouton 43, la tête 1A enregistre l'information en continu sur des pistes successives jusqu'à ce que l'on libère le bouton 43.

Les références numériques 44, 45 et 46 désignent les boutons de sélection d'entrée comprenant le bouton d'entrée vidéo 44, un bouton d'entrée de signal RGB 45 et un bouton d'entrée de copies 46. La référence numérique 47 désigne un bouton de trame obligatoire (TRAME SEULE) qui est enfoncé si l'utilisateur souhaite lire une image enregistrée à la manière d'une trame même si l'enregistrement a été fait à la manière d'une image. Ainsi, lorsqu'on enfonce le bouton de trame obligatoire (TRAME SEULE) 47, on ne tient pas compte de l'état de la mémoire et l'appareil passe en mode de lecture, toute l'information étant reproduite en mode de reproduction de trame.

En se reportant de nouveau à la figure 1, on voit que le circuit de contrôle de programme 60 est mis en oeuvre par une unité centrale de traitement (CPU) 61 suivant le programme de système inscrit dans une mémoire morte ROM 62. Un programme d'utilisateur peut être enregistré dans une mémoire vive RAM 63 comme cela sera détaillé ci-après. Un ensemble de boutons de commande 64 est prévu sur le panneau avant du circuit de contrôle de programme 60 pour assurer sélectivement les différentes fonctions de celui-ci. De plus, il est prévu un panneau d'affichage 66 sur le panneau avant ; celui-ci est commandé par l'unité CPU 61 par l'intermédiaire d'un circuit de commande d'affichage 65. L'appareil d'enregistrement et/ou de reproduction 20 et le circuit de contrôle de programme 60 sont couplés électriquement par un interface à bus 67 faisant partie d'un câble.

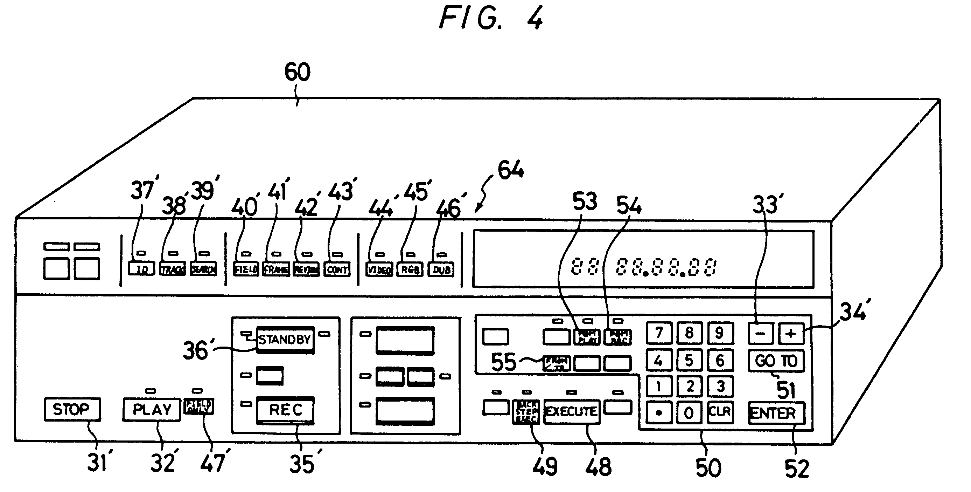

Comme représenté à la figure 4, l'ensemble des boutons de commande 64 du panneau avant du circuit de contrôle de programme 60 comprend un bouton d'arrêt (STOP) 31′, un bouton d'affichage (AFF.) 32′, un bouton moins (-) 33′, un bouton plus (+) 34′, un bouton d'enregistrement (REC) 35′, un bouton d'attente (ATT.) 36′, un bouton d'identification (ID) 37′, un bouton de piste (PISTE) 38′, un bouton de recherche (RECH.) 39′, un bouton de trame (TRAME) 40′, un bouton d'image (IMAGE) 41′, un bouton de relecture (RELEC.) 42′ un bouton de poursuite (CONT) 43′, un bouton d'entrée vidéo (VIDEO) 44′, un bouton d'entrée RGB 45′, un bouton de copies (DUB) 46′, un bouton de trame obligatoire (TRAME SEULE) 47′. Ces boutons 31′-47′ ont exactement les mêmes fonctions que les boutons portant les numéros correspondants 31 à 47 décrits ci-dessus en liaison avec le panneau de l'appareil 20 de la figure 2.

Il est de plus prévu sur le panneau du circuit de contrôle de programme 60 un bouton d'exécution de programme (EXECUTE) 48, un bouton de retour de pas (PAS EN RETOUR) 49 qui est utilisé pour commander pas à pas le retour du programme, un ensemble de touches formé de dix touches 50, un bouton d'accès direct à la tête (GO TO) 51 et un bouton d'entrée (ENTER) 52 servant à inscrire le programme défini par l'utilisateur.

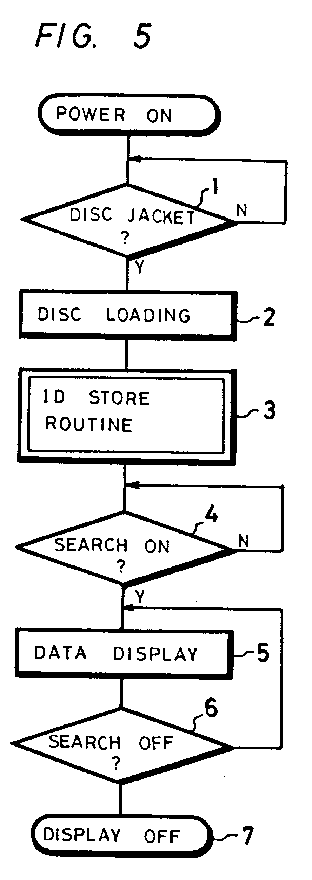

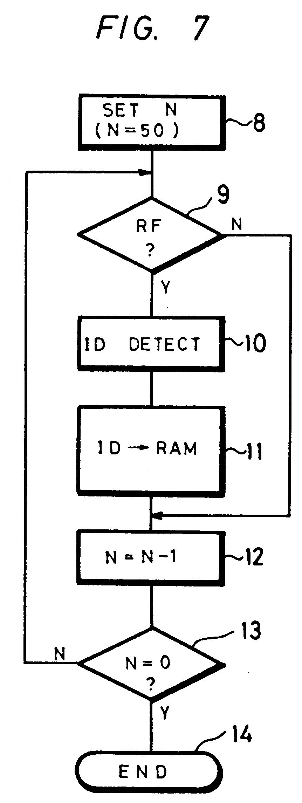

Le fonctionnement de l'appareil d'enregistrement et/ou de reproduction 20 sera décrit ci-après en supposant que l'on ignore si le disque magnétique 26 a été ou non utilisé précédemment. Si le disque magnétique 26 a déjà été utilisé, il est souhaitable de connaître le type ou la nature des informations enregistrées sur celui-ci et s'il reste une ou plusieurs pistes vides pour enregistrer une information complémentaire. De plus, comme représenté dans l'ordinogramme de la figure 5, initialement, on branche l'alimentation en actionnant le bouton marche/arrêt 21 (figure 2) de l'appareil d'enregistrement et/ou de reproduction 20. Puis, à l'étape 1, on détecte si la pochette de disque 22 a été introduite dans le moyen d'entraînement de disque 18 (figure 2). S'il n'y a pas de pochette de disque 22 dans le moyen d'entraînement de disque 18, on répète l'étape 1. Lorsqu'une pochette de disque 22 est introduite dans le moyen d'entraînement de disque 18, le programme passe à l'étape 2 au cours de laquelle le disque 26 de la pochette 22 est chargé sur le plateau 25 du moyen d'entraînement 18 de l'appareil d'enregistrement et/ou de reproduction 20. Après le chargement du disque 26, le programme passe à l'étape 3 pour mettre en oeuvre le sous-programme décrit ci-après à l'aide de la figure 7 et selon lequel on recherche automatiquement en général un signal RF, puis on détecte le signal RF à l'aide du détecteur 7 et on détermine la nature et le type d'informations enregistrées à l'aide du détecteur de signal d'enregistrement ID, puis on enregistre le signal dans la mémoire RAM 10.

Au cours de l'étape suivante 4, on détecte l'enfoncement du bouton de recherche 39 (figure 2). Si le bouton de recherche 39 n'est pas enfoncé, l'étape 4 est répétée. Si le bouton de recherche 39 est enfoncé, le programme passe à l'étape 5 au cours de laquelle l'information ID enregistrée dans la mémoire RAM 10 est lue sous la commande de l'unité CPU 9 et est affichée sur le tube cathodique 6 (figure 1) comme cela est représenté à la figure 6; Selon la figure 6, chaque symbole a représente une piste sur laquelle a été enregistrée une information de trame. Ainsi dans l'exemple représenté à la figure 6, une information de trame est enregistrée sur la première, la sixième et la huitième piste. En d'autres termes, chacune des pistes ainsi énoncées contient un signal vidéo correspondant à une trame.

Les symboles b et c représentent respectivement les pistes sur lesquelles a été enregistrée une information d'image. En d'autres termes, un signal vidéo d'une image (c'est-à-dire de deux trames) est enregistré dans deux pistes adjacentes du disque 26 par les têtes 1A et 1B respectives travaillant successivement sans mouvement du bloc porte-têtes 29. Dans l'exemple représenté à la figure 6, on a une information d'image enregistrée dans les pistes regroupées par paires à savoir les deuxième et troisième pistes, les vingt et vingt et unième pistes, les vingt-deux et vingt-troisième pistes. Le symbole d représente une piste sur laquelle a été enregistré un signal d'information numérique ; le symbole e représente une piste sur laquelle a été enregistrée une information audio. Ainsi dans l'exemple de la figure 6, une information de données numériques est enregistrée dans les pistes N^{°} 26 et 27 ; une information audio est enregistrée dans la piste N^{°} 29 ; toutes les autres pistes sont vides c'est-à-dire qu'il s'agit de pistes sur lesquelles rien n'a été enregistré.

Selon l'ordinogramme de la figure 5, après l'affichage de l'information ID au cours de l'étape 5, on détecte à l'étape 6 si le bouton de recherche 39 a été ou non libéré. Si le bouton de recherche 39 n'est pas libéré, l'étape 5 est répétée c'est-à-dire que l'affichage de l'information ID sur le tube cathodique 6 se poursuit. Si le bouton de recherche 39 a été libéré, le programme passe à l'étape 7 à laquelle l'affichage sur le tube cathodique 6 se termine.

Selon la figure 7, au cours du sous-programme de l'étape 3 de la figure 5, on désigne une piste prédéterminée N par exemple la piste N^{°} 50 à l'étape 8. Puis, le détecteur RF 7 (figure 1) détermine à l'étape 9 si un signal RF est ou non enregistré dans la piste N° 50. Si un signal RF est enregistré, le programme passe à l'étape 10 au cours de laquelle le détecteur de signal d'enregistrement ID 8 détermine si le signal RF est une information de trame, une information d'image, une information de données numériques, une information audio ou analogue. Puis à l'étape 11, la donnée identifiant le type d'informations enregistrées dans la piste 50 c'est-à-dire le signal ID est enregistrée dans la mémoire RAM 10 (figure 1) sous la commande de l'unité CPU 9 (figure 1).

Puis, le programme passe à l'étape 12 qui désigne la piste suivante N = N-1, c'est-à-dire la piste N° 49. Il est clair que si au cours de l'étape 9, on a constaté qu'aucun signal RF n'était enregistré dans la piste N° 50, le programme passerait immédiatement à l'étape 12. Puis, le programme passe à l'étape 13 au cours de laquelle on vérifie si la relation N=0 est ou non établie, c'est-à-dire si l'on se trouve à la piste N° zéro. Si la relation N=0 n'est pas vérifiée, le programme revient à l'étape 9 pour répéter les opérations décrites ci-dessus. Si N=0 est vérifié, c'est-à-dire si toutes les pistes allant de la piste N° 50 à la piste N° 1 ont été contrôlées pour y vérifier la présence de l'enregistrement d'un signal RF, le programme passe à l'étape 14 à laquelle se termine le sous-programme.

Si le bouton ID 37 (figure 2) est enfoncé, l'appareil étant en mode d'enregistrement ou en mode d'attente, le signal IF identifiant le type d'informations à enregistrer est affiché comme symbole respectif sur l'écran d'affichage 6 (figure 1). En mode de reproduction ou de lecture, la mise en oeuvre du bouton ID 37 entraîne que le signal ID correspondant à l'information enregistrée dans la piste du disque magnétique 26 à reproduire est affiché sur l'écran d'affichage 6. De plus, si le bouton de piste 38 (figure 2) est enfoncé, qu'il s'agisse du mode d'enregistrement, du mode d'attente ou du mode de lecture, le nombre de pistes balayées par la tête 1A ou 1B mise en oeuvre est affiché sur l'écran d'affichage 6 comme cela est indiqué en f à la figure 6. Il est clair que si le bouton de recherche 39 (figure 2) est enfoncé, les résultats recherchés c'est-à-dire les symboles indiquant les types d'informations, le cas échéant, enregistrés dans toutes les pistes sont affichés simultanément sur l'écran 6 comme décrit ci-dessus.

La procédure normale de mise en oeuvre du mode d'enregistrement sera décrite ci-après en référence aux figures 1 à 4. Initialement, on enfonce le bouton du commutateur d'alimentation 21 et on introduit la pochette de disque 22 dans le moyen d'entraînement 18. Une fois la pochette 22 introduite dans le moyen d'entraînement 18, les signaux RF enregistrés sur une ou plusieurs pistes sont recherchés automatiquement et l'information relative aux pistes vides est enregistrée dans la mémoire 10. Puis, celle des têtes 1A ou 1B qui travaille est déplacée jusqu'à l'adresse de la piste à laquelle l'information doit être enregistrée. Pour déplacer la tête d'une piste à la fois en direction de la périphérie intérieure du disque magnétique 26, on enfonce le bouton plus 34 une fois pour chaque piste alors que pour déplacer la tête d'une piste à la fois dans la direction inverse vers la périphérie extérieure du disque 26, on enfonce le bouton moins 33 une fois pour chaque piste. Lorsque le mouvement vers la piste d'enregistrement est terminé, si l'on enfonce le bouton d'attente 36, l'appareil d'enregistrement et/ou de reproduction 20 passe en mode d'attente. Puis, si l'on enfonce le bouton d'enregistrement 35, l'appareil d'enregistrement et/ou de reproduction 20 passe en mode d'enregistrement. A la fin de l'enregistrement choisi, si l'on enfonce le bouton d'arrêt 31, cela libère le mode d'attente. Si l'on actionne le bouton de lecture 32, l'appareil d'enregistrement et/ou de reproduction 20 passe directement en mode de lecture. Si l'on enfonce le bouton d'éjection 30, la pochette de disque 22 et le disque 26 qu'elle contient sont éjectés du moyen d'entraînement 18.

La procédure de mise en oeuvre du mode de reproduction sera décrite ci-après. Tout d'abord, on enfonce le bouton commutateur d'alimentation 21 et on introduit la pochette de disque 22 dans le moyen d'entraînement 18. Puis, on actionne le bouton de lecture 32 et ainsi l'appareil d'enregistrement et/ou de reproduction 20 passe en mode de lecture pour reproduire l'information enregistrée dans la piste au niveau de laquelle se trouve précisément la tête ; un voyant de lecture (non représenté) s'éclaire. A la reproduction d'une piste sur laquelle est enregistrée une information de trame, un voyant de trame 57 (figure 2) s'éclaire pour indiquer cela alors que si une information d'image est reproduite par les têtes 1A et 1B successivement d'une paire de pistes adjacentes, un voyant d'image 58 s'éclaire. En mode de reproduction, les voyants 57 et 58 sont commutés automatiquement par le signal ID respectif contenu dans le signal RF reproduit d'une piste. La tête peut passer d'une piste à une autre piste à reproduire. Lorsque le bouton plus 34 ou le bouton moins 33 est enfoncé en continu, la tête se déplace à une vitesse prédéterminée par piste jusqu'à la première piste dans laquelle est enregistrée une information, puis la tête passe sur la seconde piste et les pistes suivantes contenant l'information enregistrée, et cela à une vitesse prédéterminée plus élevée que la vitesse de déplacement de la première piste, ce qui permet de faire une recherche d'image sur l'écran-image ou l'écran vidéo du tube cathodique 6.

A la fin de la reproduction ou de la lecture souhaitée, on enfonce le bouton d'arrêt 31 pour passer en mode d'arrêt ; à ce moment, le moteur 23 de la broche est au repos et les têtes sont dégagées du contact avec le disque magnétique 26.

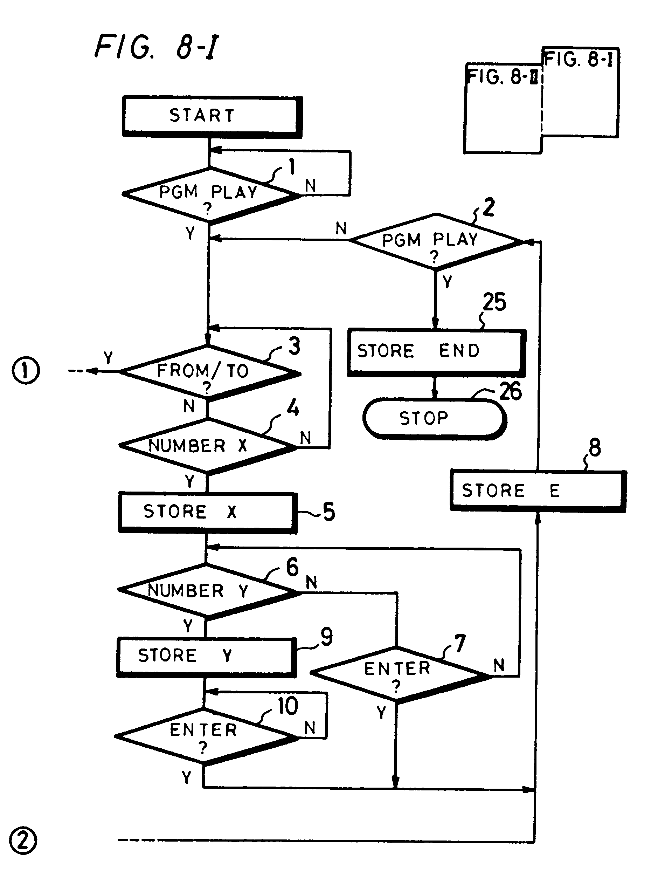

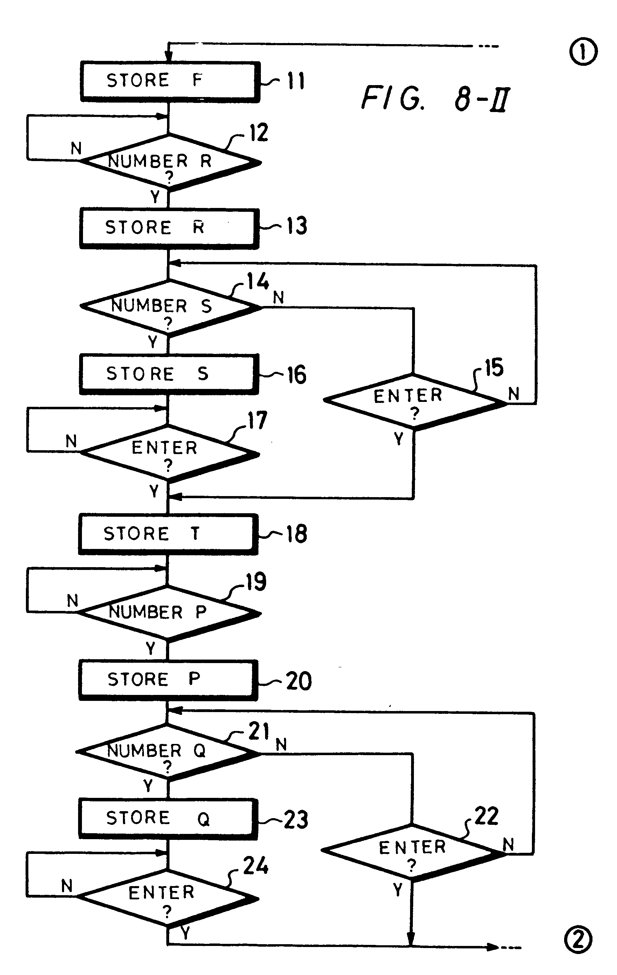

La description ci-après concerne la mise en oeuvre de la lecture programmée à l'aide du contrôleur de programme 60. En premier lieu, on passe sur le programme de lecture qui est représenté par l'ordinogramme de la figure 8 ; on initialise ce programme en enfonçant momentanément un bouton de lecture de programme (LECTURE PGM) 53 du contrôleur de programme 60 (figure 4). L'unité CPU 61 détecte l'étape 1 si le bouton de lecture de programme 53 a été enfoncé. Si le bouton de lecture de programme 53 n'a pas été enfoncé, l'étape 1 est répétée. Si le bouton de lecture de programme 53 a été enfoncé, le programme passe sur l'étape 3 à laquelle l'unité CPU 61 (figure 1) vérifie un bouton vers/à partir de (VERS/A PARTIR DE) 55 a été enfoncé (figure 4). Si le bouton 55 n'a pas été enfoncé, le programme passe sur l'étape 4 à laquelle l'unité CPU 61 vérifie si un numéro de piste X a été choisi par la mise en oeuvre sélective des touches 50 (figure 4). Si aucune des touches 50 n'a été enfoncée, le programme revient à l'étape 3. Si au contraire une ou plusieurs touches 50 ont été enfoncées, le numéro de piste X correspondant est enregistré dans la mémoire RAM 63 (figure 1) à l'étape 5.

Puis le programme passe à l'étape 6 à laquelle l'unité CPU 61 vérifie si un numéro de piste Y a été défini par le mise en oeuvre sélective des touches 50 (figure 4). Si aucune touche 50 n'a été enfoncée, le programme passe sur l'étape 7 à laquelle l'unité CPU 61 vérifie que le bouton d'entrée 52 a été enfoncé. Si le bouton d'entrée 52 n'a pas été enfoncé, le programme revient à l'étape 6. Si le bouton d'entrée 52 a été enfoncé, la lettre E indiquant que le bouton d'entrée 52 a été enfoncé, est enregistrée dans la mémoire vive RAM 63 (figure 1) à l'étape 8, puis le programme passe sur l'étape 2 ; à ce moment, l'unité CPU 61 vérifie si le bouton de lecture de programme 53 (LECTURE PGM) a de nouveau été enfoncé pour signifier la fin du programme. Si le bouton de lecture de programme 53 n'a pas été de nouveau enfoncé, le programme revient à l'étape 3. En d'autres termes, la série d'opérations représentée par les étapes 3 à 8 constitue un programme pour effectuer un accès de piste aléatoire et par lequel une certaine piste identifiée par le nombre X à un chiffre est mise à l'état et est enregistrée dans la mémoire vive RAM 63.

Cependant, si à l'étape 6 le numéro de piste Y est désigné par une commande appropriée de touches 50, le numéro de piste Y est enregistré dans la mémoire RAM 63 (figure 1) à l'étape 9. Puis à l'étape 10, l'unité CPU 61 vérifie si le bouton d'entrée 52 est enfoncé. Si le bouton d'entrée 52 n'a pas été enfoncé, l'étape 10 est répétée jusqu'à ce que ce bouton ait été enfoncé. Lorsqu'on enfonce le bouton 52, le programme passe à l'étape 8 à laquelle la lettre E indiquant l'enfoncement du bouton 52 est enregistrée dans la mémoire RAM 63, puis le programme revient à l'étape 2. C'est pourquoi, le fait que le programme traverse les étapes 6, 9 et 10 signifie que les nombres X et Y représentant un numéro de piste à deux chiffres ont été faits au cours de l'établissement du programme.

Si le bouton vers/à partir de 55 a été enfoncé, à l'étape 3, la lettre F indiquant le premier mot de "vers/à partir de" est enregistrée dans la mémoire RAM 63 à l'étape 11. Puis le programme passe à l'étape 12 à laquelle l'unité CPU 61 vérifie qu'un numéro de piste R est choisi par la mise en oeuvre appropriée des touches 50. Si les touches n'ont pas été enfoncées pour sélectionner un numéro de piste R, l'étape 12 est répétée. Si le numéro de piste R est choisi par la mise en oeuvre des touches 50, ce numéro de piste R est enregistré dans la mémoire RAM 63 à l'étape 13.

Puis le programme passe à l'étape 14 à laquelle l'unité CPU 61 vérifie qu'un numéro de piste S a été sélectionné par la mise en oeuvre appropriée de touches 50. S'il n'y a pas de numéro de piste S sélectionné, le programme passe à l'étape 15 à laquelle l'unité CPU 61 vérifie que le bouton d'entrée 52 a été enfoncé. Si le bouton d'entrée 52 n'a pas été enfoncé, le programme revient à l'étape 14. Par contre, si le bouton d'entrée 52 a été enfoncé, le programme passe à l'étape 18 à laquelle la lettre T qui indique le dernier mot de "vers/à partir de" est enregistrée dans la mémoire vive RAM 63. En d'autres termes, dans la série d'opérations allant des étapes 11 à 18, un certain numéro de piste formé d'un seul chiffre R est désigné comme point de départ de l'opération "vers/à partir de" au cours de l'établissement d'un programme concernant un accès continu à une piste.

Si le numéro de piste S a été sélectionné par la mise en oeuvre des touches 50 à l'étape 14, le numéro de piste S est enregistré dans la mémoire RAM 63 à l'étape 16. Puis à l'étape 17, l'unité CPU 61 vérifie que le bouton d'entrée 52 a été enfoncé. Si le bouton d'entrée 52 n'a pas été enfoncé, l'étape 17 est répétée. Si par contre le bouton d'entrée 52 a été enfoncé, le programme passe à l'étape 18 à laquelle la lettre T qui indique la fin de "vers/à partir de" est enregistrée dans la mémoire RAM 63. En d'autres termes, au cours de l'exécution du programme à travers les étapes 14, 16 et 17, une piste identifiée par deux chiffres ou nombres R et S est identifiée comme point de départ de l'opération voulue "vers/à partir de" ou d'une série continue de pistes à lire en séquence.

Puis, le programme passe à l'étape 19 à laquelle l'unité CPU 61 vérifie qu'un numéro de piste P a été choisi par la commande sélective des touches 50. Si le numéro de piste P n'a pas été choisi, l'étape 17 est répétée. Si au contraire les touches 50 ont été actionnées sélectivement, le numéro de piste respectif P est enregistré dans la mémoire RAM 63 à l'étape 20. Puis, le programme passe à l'étape 21 à laquelle l'unité CPU 61 vérifie qu'un numéro de piste Q a été choisi par la commande sélective des touches 50. Si un numéro de piste Q n'a pas été choisi, le programme passe à l'étape 22 à laquelle l'unité CPU 61 vérifie que le bouton d'entrée 52 a été enfoncé. Si le bouton d'entrée 52 n'a pas été enfoncé, le programme revient à l'étape 21. Si au contraire, le bouton d'entrée 52 a été enfoncé, le programme revient à l'étape 8 mentionnée ci-dessus. A l'étape 8, la lettre E indiquant que le bouton d'entrée 52 a été enfoncé, est enregistrée dans la mémoire RAM 63, puis le programme revient à l'étape 2. En d'autres termes, les opérations allant des étapes 19 à 22 définissent un certain numéro de piste P formé d'un seul chiffre comme point final pour le programme "vers/à partir de" pour accéder en continu aux pistes.

Si un numéro de piste Q est choisi par la commande sélective des touches 50 à l'étape 21, le numéro de piste Q est enregistré dans la mémoire RAM 63 à l'étape 23. Puis, le programme passe à l'étape 24 à laquelle l'unité CPU 61 vérifie que le bouton d'entrée 52 a été enfoncé. Si le bouton d'entrée 52 n'a pas été enfoncé, l'étape 24 est répétée. Au contraire, si le bouton d'entrée 52 a été enfoncé, le programme passe à l'étape 8. C'est pourquoi les opérations correspondant aux étapes 21, 23 et 24 définissent un numéro de piste particulier formé de deux chiffres ou nombres P et Q comme point final du programme "vers/à partir de" dans lequel on accède en continu aux pistes, l'une après l'autre.

Enfin, le programme revient à l'étape 2 à laquelle si le bouton de lecture de programme (LECTURE PGM) 53 (figure 4) est de nouveau enfoncé, cela indique la fin du programme de lecture défini par l'utilisateur et le programme passe sur l'étape 25. A l'étape 25, un repère FIN indiquant que le bouton de lecture de programme 53 a de nouveau été enfoncé, c'est-à-dire indiquant la fin du programme de lecture de l'utilisateur, est enregistré dans la mémoire RAM 63 et les opérations de définition de ce programme sont terminées.

A titre d'exemple, les opérations pour créer un programme de lecture mélangé dans lequel les numéros de piste répartis de façon aléatoire "5", "17" et "12", les numéros de piste séquentiels "13"...."25" et les numéros de piste répartis de manière aléatoire "30", "45" et "1" sont à lire ou à reproduire dans cet ordre, seront décrites en référence à l'ordinogramme de la figure 8. Après avoir parcouru les étapes 1 et 3, le programme passe à l'étape 4 à laquelle l'une des touches 50 correspondant au numéro de piste "5" est enfoncé ; puis à l'étape 5, le chiffre "5" est enregistré dans la mémoire RAM 63. Comme il n'y a pas de numéro de piste de désigné à l'étape 6, le programme passe à l'étape 7 à laquelle le bouton d'entrée 52 est enfoncé et la lettre E est enregistrée dans la mémoire RAM 63 à l'étape 8 ; puis, le programme revient à l'étape 2. Comme le bouton de lecture de programme 53 n'est pas de nouveau enfoncé à ce moment, le programme passe de l'étape 3 à l'étape 4 et à ce moment l'actionnement de l'une des touches 50 correspondant au numéro "1" est détecté, ce qui correspond au second chiffre du numéro de piste "17" et à l'étape 5 le chiffre "1" est enregistré dans la mémoire RAM 63. De plus, celle des touches 50 qui représente le chiffre "7" a été enfoncé à l'étape 6, ce qui correspond au premier chiffre du numéro de piste "17" et à l'étape 9, le chiffre "7" est mis dans la mémoire RAM 63. A l'étape 10, on actionne le bouton d'entrée 52 de manière à enregistrer la lettre "E" dans la mémoire RAM 63 ; puis, le programme revient à l'étape 2. Des opérations analogues sont exécutées pour introduire le numéro de piste "12" dans la mémoire 63.

A la suite de cela, on actionne le bouton "vers/à partir de" 55 à l'étape 3 et la lettre F est enregistrée dans la mémoire RAM 63 à l'étape 11. A l'étape 12, la touche 50 qui représente le chiffre "1" est enfoncée pour désigner le second chiffre du numéro de piste "13" et le chiffre "1" est enregistré dans la mémoire RAM 63 à l'étape 13. De plus, à l'étape 14, la touche 50 qui représente le numéro "3" est enfoncée de manière à désigner le premier chiffre du numéro de piste "13" ; le chiffre "3" est enregistré dans la mémoire RAM 63 à l'étape 16. A l'étape 17, le bouton d'entrée 52 est actionné et à l'étape 18 la lettre T est enregistrée dans la mémoire RAM 63.

Puis à l'étape 19, la touche 50 qui représente le numéro "2" est enfoncée pour désigner le second chiffre du numéro de piste "25"; à l'étape 20, le chiffre "2" est enregistré dans la mémoire RAM 63. A l'étape 21, la touche 50 qui représente le chiffre "5" est enfoncée pour désigner le premier chiffre du numéro de piste "25"; ce chiffre "5" est enregistré dans la mémoire RAM 63 à l'étape 23. A l'étape 24, on actionne le bouton d'entrée 52 et à l'étape on enregistre la lettre E dans la mémoire RAM 63; le programme revient à l'étape 2.

A l'étape 4, on enfonce la touche 50 représentant le chiffre "3" pour désigner le second chiffre du numéro de piste "30"; ce chiffre "3" est enregistré dans la mémoire RAM 63 à l'étape 5. A l'étape 6, la touche 50 qui représente le chiffre "0" est enfoncée pour désigner le premier chiffre du numéro de piste "30" et à l'étape 9, le chiffre "0" est enregistré dans la mémoire RAM 63. A l'étape 10, on actionne le bouton d'entrée 52 et à l'étape 8 la lettre E est enregistrée dans la mémoire RAM 63. A la suite de cela, le programme revient à l'étape 2.

Des opérations similaires sont effectuées pour les numéros de piste "45" et "1". A la suite de cela, à l'étape 2, on actionne de nouveau le bouton de lecture de programme 53 pour désigner la fin du programme et à l'étape 25 le repère FIN est enregistré dans la mémoire RAM 63; les opérations de programmation sont alors terminées.

Ainsi, le registre de programme (non représenté) de la mémoire RAM 63 contient les données représentant le programme de lecture défini par l'utilisateur [5E17E12EF13T25E30E45E1E FIN] c'est-à-dire le programme mélangé créé comme indiqué ci-dessus.

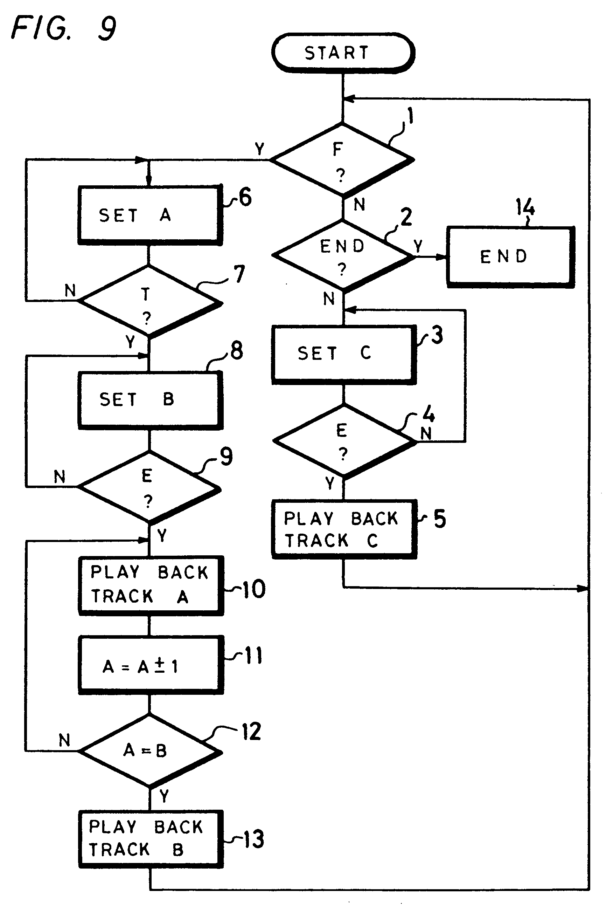

L'exécution du programme de lecture, mélangé, décrit ci-dessus, enregistré dans la mémoire RAM 63 sera décrite ci-après en référence à l'ordinogramme de la figure 9. Après le démarrage du programme à l'étape 1, l'unité CPU 61 vérifie que le programme de lecture défini par l'utilisateur démarre sur F c'est-à-dire qu'il vérifie si le programme demande initialement l'accès continu aux pistes. Dans la négative, le programme passe à l'étape 2 à laquelle l'unité CPU 61 vérifie que l'on est à FIN ou que cela est détecté dans le programme enregistré. Si FIN n'a pas été détecté, le programme passe à l'étape 3 à laquelle le numéro de piste C par exemple le numéro de piste "5" de l'exemple décrit ci-dessus est mis à l'état. A l'étape 4, l'unité CPU 61 vérifie si E suit le numéro de piste "5". Si E n'est pas détecté à l'étape 4, le programme revient à l'étape 3. Si par ailleurs E est détecté, le programme passe à l'étape 5 à laquelle le moteur d'accès de têtes 27 est mis en oeuvre de manière appropriée pour accéder au numéro de piste "5" et l'information enregistrée sous le numéro de piste "5" est reproduite en mode de lecture de programme, en retour.

Après la lecture de l'information enregistrée sous le numéro de piste C, le programme revient à l'étape 1 et les opérations décrites en relation aux étapes 2-5 sont répétées pour les numéros de piste "17" et "12". On a ainsi l'exécution séquentille de la lecture programmée des pistes choisies de manière aléatoire "5", "17" et "12".

Après la lecture de la piste "12", lorsque la lettre F est détectée à l'étape 1, le programme passe à l'étape 6. A l'étape 6, le numéro de piste du programme de lecture défini par l'utilisateur et qui constitue le point de départ de "vers/à partir de" ou l'accès continu aux pistes c'est-à-dire le numéro de piste "13" de l'exemple décrit ci-dessus est mis à l'état. De façon plus précise, le chiffre "1" qui correspond au second chiffre du numéro de piste "13" est d'abord mis à l'état au cours de l'étape 6. Puis au cours de l'étape 7, l'unité CPU 61 vérifie que la lettre T est détectée ensuite dans le programme. Si cette lettre n'est pas détectée, le programme revient à l'étape 6 à laquelle le numéro "3" correspondant au premier chiffre du numéro de piste "13" est misà l'état, de sorte que le numéro complet de piste "13" est finalement mis.

Si par ailleurs la lettre T est détectée à l'étape 7, le programme passe à l'étape 8 à laquelle le numéro de piste du programme défini par l'utilisateur constitue le point final de "vers/à partir de" ou de l'accès continu aux pistes c'est-à-dire que le numéro de piste "25" est mis à l'état. De façon plus précise dans ce cas, le chiffre "2" qui correspond au second chiffre du numéro de piste "25" est d'abord mis au cours de l'étape 8, puis à l'étape 9, l'unité CPU 61 vérifie que le chiffre "2" est suivi par E. Si au cours de l'étape 9, la lettre E n'est pas détectée, le programme revient à l'étape 8 à laquelle le chiffre "5" qui correspond au premier chiffre du numéro de piste "25" est mis. Ainsi finalement on a le numéro de piste "25".

Lorsque E est détecté au cours de l'étape 9, l'information enregistrée sous le numéro de piste A c'est-à-dire le numéro de piste "13" est reproduite à l'étape 10.

A la fin de la lecture du numéro de piste A c'est-à-dire du numéro de piste "13", le programme passe à l'étape 11 à laquelle l'information enregistrée dans la piste suivante de "vers/à partir de " ou de l'accès en continu aux pistes, est reproduite. De façon plus particulière à l'étape 11, on accède au numéro de piste A±1 c'est-à-dire que l'on reproduit l'information enregistrée dans le numéro de piste "14". A l'étape 11, l'utilisation des symboles "+" et "-" indique que le "vers/à partir de" peut être dans le sens des chiffres croissants ou dans le sens des chiffres décroissants. A l'étape 12, l'unité CPU 61 vérifie que l'égalité A=B est établie c'est-à-dire l'unité vérifie si ou non la piste qui est en cours de lecture est la piste finale de "vers/à partir de" ou de l'accès continu aux pistes dans le programme de lecture défini par l'utilisateur. S'il ne s'agit pas de la dernière piste, le programme revient à l'étape 10 et les opérations décrites ci-dessus sont répétées. Ainsi dans l'exemple donné ci-dessus, l'information enregistrée sous les numéros de piste "13", "14", "15" ... "25" est reproduite en séquence. Lorsqu'à l'étape 12, on arrive à l'égalité A=B c'est-à-dire si le numéro de piste que l'on a est le numéro de piste "25", le programme passe à l'étape 13. A l'étape 13, l'information enregistrée sous le numéro de piste B c'est-à-dire le numéro de la piste finale "25" est reproduite et à la fin le programme revient à l'étape 1.

Puis, pour les pistes portant les numéros "30", "45" et "1" et qui suivent la période d'accès en continu aux pistes, on exécute des opérations analogues à celles décrites pour les pistes portant les numéros "5", "17" et "12" ci-dessus. Lorsque finalement on détecte FIN à l'étape 2, le programme passe à l'étape 14 à laquelle se termine l'exécution du programme d'utilisateur tel que décrit.

Il est à remarquer que le contrôleur de programme 60 présente différentes fonctions de travail qui sont intéressantes pour l'utilisateur et parmi lesquelles la fonction la plus significative sera décrite ci-après.

De façon plus particulière si pour une raison quelconque on veut revenir à la lecture de la piste précédente au cours du programme de lecture choisi par l'utilisateur, on actionne le bouton de retour de pas 49 (figure 4) et en réponse à cette commande, la lecture du programme de lecture choisi par l'utilisateur est interrompue et le programme revient d'une longueur prédéterminée de manière à pouvoir chercher ou localiser immédiatement la piste voulue.

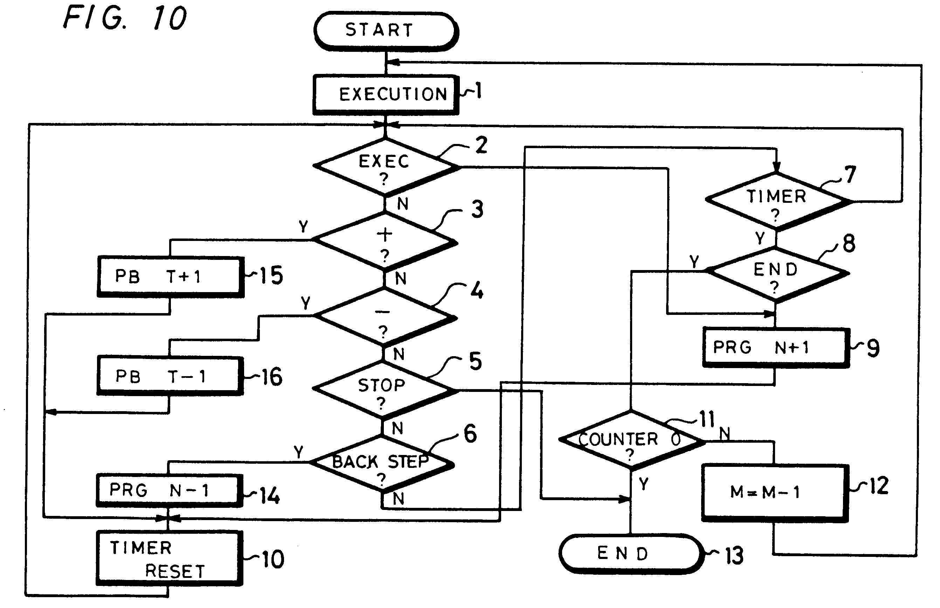

L'opération décrite ci-dessus sera explicitée en référence à l'ordinogramme de la figure 10; selon cette figure, après le démarrage du programme, son exécution est initialisée par la mise en oeuvre du bouton d'exécution de programme 48 à l'étape 1. Puis à l'étape 2, l'unité CPU 61 détecte si le bouton d'exécution 48 (figure 4) a été enfoncé. Si le bouton d'exécution 48 n'a pas été enfoncé, le programme passe à l'étape 3 à laquelle l'unité CPU 61 vérifie si le bouton plus 34′ (figure 4) a été enfoncé. Si le bouton plus 34′ n'a pas été enfoncé, le programme passe à l'étape 4 à laquelle l'unité CPU 61 vérifie que le bouton moins 33′ (figure 4) a été enfoncé. Si le bouton moins 33′ n'a pas été enfoncé, le programme passe à l'étape 5 à laquelle l'unité CPU 61 vérifie si le bouton arrêt 31′ (figure 4) a été enfoncé. Si le bouton arrêt 31′ n'a pas été enfoncé, le programme passe à l'étape 6 à laquelle l'unité CPU 61 vérifie si le bouton de retour de pas 49 a été enfoncé (figure 4). Si le bouton de retour de pas 49 n'a pas été enfoncé, le programme passe à l'étape 7 à laquelle l'unité CPU 61 vérifie si une horloge d'intervalle (non représentée) appartenant à l'unité CPU 61 a indiqué l'écoulement d'un intervalle de temps prédéterminé. Si l'intervalle de temps prédéterminé s'est écoulé, le programme passe à l'étape 8 au cours de laquelle l'unité CPU 61 vérifie si toutes les pistes programmées appartenant au programme de lecture défini par l'utilisateur ont été lues. Si le programme de lecture défini par l'utilisateur n'est pas terminé, le programme passe à l'étape 9 et le programme de lecture avance d'un pas. Puis, le programme de la figure 10 passe à l'étape 10 pour laquelle l'horloge d'intervalle de l'unité CPU 61 est remise à l'état initial et le programme revient à l'étape 2 pour exécuter de manière répétée les opérations décrites ci-dessus.

Si à l'étape 8, on décide que le programme de lecture défini par l'utilisateur est terminé, le programme de la figure 10 passe à l'étape 11 à laquelle un compteur (non représenté) dans l'unité CPU 61 compte le nombre de fois que le programme de lecture défini par l'utilisateur a été exécuté ou répété et de plus on vérifie si le nombre résultant du comptage est ou non nul. Si le nombre compté n'est pas égal à zéro, l'état de comptage est décrémenté d'une unité à l'étape 12 et le programme de la figure 10 revient à l'étape 1 à laquelle les opérations décrites ci-dessus sont répétées. Si au contraire l'état de comptage est égal à zéro, à l'étape 11, le programme passe à l'étape 13 selon la figure 10 et l'exécution de toutes les opérations se termine.

De plus, si pendant l'exécution du programme de la figure 10, on détecte à l'étape 2 que le bouton d'exécution 48 a de nouveau été enfoncé, alors quel que soit l'état de l'horloge d'intervalle de l'unité CPU 61, le programme de la figure 10 passe à l'étape 9. En d'autres termes quel que soit l'intervalle normal du programme, on peut faire avancer manuellement le programme en enfonçant le bouton d'exécution 48.

Pendant que le programme est exécuté par suite de l'enfoncement du bouton d'exécution 48, si l'on souhaite inverser l'avancement du programme de lecture défini par l'utilisateur, on actionne le bouton de retour pas à pas 49, ce qui est détecté à l'étape 6. En d'autres termes, si le bouton de retour pas à pas 49 est enfoncé une fois à l'étape 6, le programme passe à l'étape 14 à laquelle on exécute une étape dans le sens inverse du programme de lecture défini par l'utilisateur.

En outre, si à l'étape 3 le bouton plus 34′ est enfoncé, le programme passe à l'étape 15 dans laquelle on peut chercher l'information enregistrée dans la piste qui suit directement. De la même manière, si à l'étape 4, on enfonce le bouton moins 33′, le programme passe à l'étape 16 à laquelle on peut rechercher l'information enregistrée dans la piste qui précède directement. En d'autres termes, si l'on enfonce le bouton de retour pas à pas 49, il est possible de faire revenir d'un pas le programme de lecture défini par l'utilisateur et de chercher l'information enregistrée dans la piste correspondante alors que si l'on enfonce le bouton moins 33′ ou le bouton plus 34′, on peut chercher l'information enregistrée dans la piste qui précède ou qui suit directement. Lorsque l'étape 15 ou 16 est terminée, le programme de la figure 10 passe à l'étape 10 à laquelle l'horloge d'intervalle est remise à l'état initial. Puis, le programme revient à l'étape 2 selon la figure 10 et les opérations mentionnées ci-dessus sont répétées.

De plus, si l'on enfonce le bouton d'arrêt 31′ à l'étape 5, le programme de la figure 10 passe immédiatement à l'étape 13 à laquelle se terminent toutes les opérations.

Bien qu'un seul mode de réalisation préférentiel de l'invention ait été décrit en détail ci-dessus en référence aux dessins, il est clair que l'invention n'est pas limitée à ce mode de réalisation précis et que de nombreuses variantes et modifications peuvent être envisagées par les spécialistes sans sortir du cadre de l'invention.

## Revendications

1. Appareil d'enregistrement et/ou de reproduction de différents types de signaux d'information sur des pistes d'enregistrement circulaires concentriques d'un disque d'enregistrement magnétique (20), cet appareil comprenant :
- un moteur (23) pour entraîner en rotation, à une vitesse prédéterminée, le disque d'enregistrement magnétique,
- au moins un transducteur (1A, 1B) pour enregistrer et/ou reproduire les signaux d'information des pistes d'enregistrement,
- un moyen de positionnement (27, 28, 29) pour positionner le transducteur sur une piste choisie,
- des boutons de commande comprenant au moins dix touches (50) de sélection des pistes et une touche de sélection de piste en série (55) pour définir des séquences de programme du moyen de positionnement (27, 28, 29) du transducteur (1A, 1B),
- une mémoire de séquences (63) pour enregistrer la séquence des données correspondant aux séquences de programme définies par les boutons de commande et un moyen de contrôle de programme (61, 62) couplé à la mémoire de séquences (63) pour contrôler le moyen de positionnement (27, 28, 29), en séquence, suivant la séquence de données enregistrées dans la mémoire de séquences, la séquence de données contenant de manière mélangée une séquence de sélection de pistes aléatoire, et une séquence de sélection de piste en série, ce moyen de contrôle de programme (61, 62) étant mis en oeuvre par l'un des boutons de commande (49) pour interrompre la séquence de programme et pour récupérer une étape de programme précédente de la séquence de programme, et la séquence de sélection de piste en série étant définie par la commande de la touche (55) de sélection de piste en série après sélection d'une piste de départ par la commande sélective des dix touches (50).

## Claims

1. Apparatus for recording and/or for reproducing various types of information signals on concentric circular recordings tracks of a magnetic recording disc (20), this apparatus comprising:
- a motor (23) for rotationally driving the magnetic recording disc at a predetermined speed,
- at least one transducer (1A, 1B) for recording and/or reproducing the information signals of the recording tracks,
- a positioning means (27, 28, 29) for positioning the transducer on a chosen track,
- control buttons comprising at least ten keys (50) for selection of the tracks and a key for track selection in series (55), for defining programme sequences for the positioning means (27, 28, 29) of the transducer (1A, 1B),
- a sequences memory (63) for recording the sequence of data corresponding to the programme sequences defined by the control buttons and a programme control means (61, 62) coupled to the sequences memory (63) for controlling the positioning means (27, 28, 29) in sequence according to the sequence of data recorded in the sequences memory, the sequence of data containing, mixed, a sequence for random selection of tracks, and a sequence for track selection in series, this programme control means (61, 62) being invoked by one of the control buttons (49) in order to interrupt the programme sequence and to recover a preceding programme step of the programme sequence, and the sequence for track selection in series being defined by the command from the key (55) for track selection in series after selection of a starting track by the selective command from the ten keys (50).

## Patentansprüche

1. Gerät zur Aufzeichnung und/oder Wiedergabe unterschiedlicher Arten von Informationssignalen auf kreisförmigen konzentrischen Aufzeichnungsspuren einer magnetischen Aufzeichnungsplatte (20), wobei das Gerät aufweist:
- einen Motor (23) für den Drehantrieb der magnetischen Aufzeichnungsplatte mit einer vorbestimmten Geschwindigkeit,
- wenigstens einen Wandler (1A, 1B) zur Aufzeichnung und/oder Wiedergabe der Informationssignale in den bzw. von den Aufzeichnungsspuren,
- eine Positionierungseinrichtung (27, 28, 29) zur Positionierung des Wandlers auf einer ausgewählten Spur,
- eine Anordnung von Steuertasten, die wenigstens zehn Tasten (50) zur Auswahl der Spuren und eine Taste (55) zur Auswahl einer Spurenserie umfaßt, für die Festlegung von Programmfolgen der Positionierungseinrichtung (27, 28, 29) des Wandlers (1A, 1B),
- einen Sequenzenspeicher (63) zur Speicherung der den durch die Steuertasten festgelegten Programmfolgen entsprechenden Datenfolge und eine mit dem Sequenzenspeicher (63) verbundene Programmsteuereinrichtung (61, 62) für die Folgesteuerung der Positionierungseinrichtung (27, 28, 29) gemäß der in dem Sequenzenspeicher (63) gespeicherten Datenfolge, wobei die Datenfolge gemischt eine aleatorische Spurauswahlfolge und eine Spurserienauswahlfolge enthält, wobei die Programmsteuereinrichtung (61 , 62) durch eine der Steuertasten (49) aktiviert wird, um die Programmfolge zu unterbrechen und zu einem früheren Programmschritt der Programmfolge zurückzukehren, wobei die Spurserienauswahlfolge nach der durch wahlweise Betätigung der zehn Steuertasten (50) erfolgenden Auswahl einer Ausgangsspur durch Betätigung der Taste (55) zur Auswahl einer Spurenserie festgelegt wird.
